(19) Europäisches Patentamt
European Patent Office
Office européen des brevets

(11) EP 4 432 584 B1

(12) **EUROPEAN PATENT SPECIFICATION**

(45) Date of publication and mention of the grant of the patent:
**24.12.2025 Bulletin 2025/52**

(21) Application number: **22926949.3**

(22) Date of filing: **15.02.2022**

(51) International Patent Classification (IPC):
***H04B 10/61*** *(2013.01)* ***H04J 14/02*** *(2006.01)*

(52) Cooperative Patent Classification (CPC):
**H04B 10/616; H04J 14/0298**

(86) International application number:
**PCT/JP2022/005774**

(87) International publication number:
**WO 2023/157044 (24.08.2023 Gazette 2023/34)**

(54) **OPTICAL RECEIVER AND OPTICAL RECEPTION METHOD**

OPTISCHER EMPFÄNGER UND OPTISCHES EMPFANGSVERFAHREN

RÉCEPTEUR OPTIQUE ET PROCÉDÉ DE RÉCEPTION OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.09.2024 Bulletin 2024/38**

(73) Proprietor: **MITSUBISHI ELECTRIC CORPORATION**
**Chiyoda-ku**
**Tokyo 100-8310 (JP)**

(72) Inventors:
- **MATSUDA, Keisuke**
  **Tokyo 100-8310 (JP)**
- **YOSHIDA, Tsuyoshi**
  **Tokyo 100-8310 (JP)**

(74) Representative: **Plasseraud IP**
**104 Rue de Richelieu**
**CS92104**
**75080 Paris Cedex 02 (FR)**

(56) References cited:

| | |
|---|---|
| **EP-A1- 4 120 593** | **WO-A1-2021/181568** |
| **WO-A1-2021/181568** | **US-A1- 2010 329 697** |
| **US-A1- 2020 389 234** | **US-A1- 2021 119 709** |
| **US-B2- 9 048 957** | **US-B2- 9 379 820** |
| **US-B2- 9 686 020** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 432 584 B1

## Description

### TECHNICAL FIELD

The present disclosure relates to an optical receiver and an optical reception method.

### BACKGROUND ART

In recent years, the bands of digital analog converters (hereinafter, simply referred to as DACs) and analog digital converters (hereinafter, simply referred to as ADCs) mounted on large-scale integrated circuits (hereinafter, referred to as a DSP-LSIs) that perform digital signal processing for optical communication of a digital coherent system continue broadening. The bands of optical parts that constitute optical transceivers also continue broadening in addition to DACs and ADCs mounted on DSP-LSIs, and the optical transceivers as a whole have larger capacity and broader bands.

To utilize a large-volume throughput and a wider band of an optical transceiver, a DSP-LSI multiplexes subcarriers. Consequently, one optical transceiver supports communication with a plurality of communicating parties and simultaneously supports signal accommodation of a plurality of services, so that the optical transceiver can contribute to efficiently constructing metro and access networks.

In this regard, although it is necessary to perform clock synchronization for a signal transmitted from each of the communicating parties to support communication with the plurality of communicating parties, a configuration of the optical transceiver is complicated in a case where a plurality of clock sources are mounted on the optical transceiver for communication with the plurality of communicating parties. By contrast with this, for example, a conventional technique described in Non-Patent Literature 1 achieves clock synchronization by performing resampling in synchronization with clocks as digital signal processing in a DSP-LSI.

An optical receiver described in Non-Patent Literature 1 performs division and dispersion compensation on subcarriers in a frequency domain, and then dynamically changes a Finite Impulse Response filter (hereinafter, referred to as an FIR filter.) coefficient in a time domain to adjust delay. Thus, a clock frequency difference between a received signal and the optical receiver is compensated for.

### CITATION LIST

### NON-PATENT LITERATURE

Non-Patent Literature 1: D. Schmidt and B. Lankl, "Structure of a Digital Feedback Clock Recovery for Parallelized Receivers," in Advanced Photonics, OSA Technical Digest (CD) (Optical Society of America, 2011), paper SPTuC2.

Additionally, US 9 379 820 B2, WO 2021/181568 A1, EP 4 120 593 A1, US 2010/329697 A1, US 9 686 020 B2, US 9 048 957 B2 disclose other conventional techniques.

### SUMMARY OF INVENTION

### TECHNICAL PROBLEM

However, the conventional technique described in Non-Patent Literature 1 needs to adjust delay using the FIR filter, and therefore has a problem that a circuit scale of the DSP-LSI increases and power consumption increases.

The present disclosure solves the above problem, and an object of the present disclosure is to provide an optical receiver and an optical reception method that can suppress an increase in power consumption required to clock synchronization with communicating parties.

### SOLUTION TO PROBLEM

The invention is defined by the appended claims.

### ADVANTAGEOUS EFFECTS OF INVENTION

According to the present disclosure, a clock phase of a signal in a time domain whose number of samples has been adjusted is detected, a clock frequency difference from a received signal is estimated using a detection value of the clock phase, a sampling phase for each Fourier transform is determined depending on an estimation value of the clock frequency difference, a filter coefficient associated with a delay amount corresponding to the sampling phase is selected from a lookup table in which a plurality of filter coefficients for compensating wavelength dispersion and adjusting delay of an optical signal in an optical transmission path are stored, and a signal divided by a division unit is multiplied with the selected filter coefficient. Consequently, the optical receiver according to the present disclosure can suppress an increase in power consumption required to clock synchronization with communicating parties.

BRIEF DESCRIPTION OF DRAWINGS

FIG. 1 is a block diagram illustrating a configuration example of an optical receiver according to Embodiment 1.
FIG. 2 is a flowchart illustrating an optical reception method according to Embodiment 1.
FIG. 3 is a block diagram illustrating a configuration example of an optical receiver according to Embodiment 2.
FIG. 4 is a block diagram illustrating a hardware configuration that implements the functions of the optical receivers according to Embodiment 1 and Embodiment 2.
FIG. 5 is a block diagram illustrating a hardware configuration that executes software that implements the functions of the optical receivers according to Embodiment 1 and Embodiment 2.

DESCRIPTION OF EMBODIMENTS

Embodiment 1.

FIG. 1 is a block diagram illustrating a configuration example of an optical receiver 1 according to Embodiment 1. An optical signal received by the optical receiver 1 is obtained by performing frequency division multiplexing on asynchronous optical signals transmitted from a plurality of communicating parties as subcarrier signals. FIG. 1 illustrates a case where the optical receiver 1 can receive an optical signal in which four subcarrier signals at maximum are multiplexed.
As illustrated in FIG. 1, the optical receiver 1 includes a coherent detector 2, an ADC 3, and a reception DPS 4. The reception DSP 4 includes an FFT unit 41, a division unit 42, and a subcarrier demodulation unit 43 for each subcarrier signal. The subcarrier demodulation unit 43 includes a multiplication unit 431, an IFFT unit 432, a number-of-samples adjustment unit 433, an FIFO 434, an adaptive equalization unit 435, a phase compensation unit 436, a demapping unit 437, a clock frequency difference estimation unit 438, and a clock frequency difference compensation unit 439.
FIG. 2 is a flowchart illustrating an optical reception method according to Embodiment 1, and illustrates an operation of the reception DSP 4 included in the optical receiver 1. First, the coherent detector 2 coherently detects an optical signal received by the optical receiver 1, and converts the optical signal into an electrical signal. The ADC 3 is an analog-to-digital converter that converts the electrical signal coherently detected and acquired by the coherent detector 2 into a digital signal. The digital signal obtained by conversion by the ADC 3 is output to the FFT unit 41 that is a Fourier transform unit.
In the reception DSP 4, the FFT unit 41 performs Fourier transform on the digital signal converted by the ADC 3 into a signal in a frequency domain (step ST1). The division unit 42 divides the signal in the frequency domain converted by the FFT unit 41 into a signal in the frequency domain corresponding to each subcarrier signal (step ST2). The signals divided by the division unit 42 are input to the respective individual subcarrier demodulation units 43.
The multiplication unit 431 multiplies the signal input to the subcarrier demodulation unit 43 with a filter coefficient for compensating for wavelength dispersion and adjusting delay (step ST3). The signal multiplied with the filter coefficient by the multiplication unit 431 is output to the IFFT unit 432 that is an inverse Fourier transform unit. Note that the filter coefficient is output from the clock frequency difference compensation unit 439 to the multiplication unit 431.
The IFFT unit 432 performs inverse Fourier transform on the signal multiplied with the filter coefficient into a signal in a time domain (step ST4). The FFT unit 41 and the IFFT unit 432 perform Fourier transform and inverse Fourier transform on a plurality of samples corresponding to signals in a continuous time. In this regard, the FFT unit 41 and the IFFT unit 432 perform transform by overlapping sections in the time domain to prevent deterioration of signals at a seam of the sections in which Fourier transform and inverse Fourier transform are performed. The IFFT unit 432 eliminates the above overlap portion in the signal subjected to inverse Fourier transform, adds one extra sample to the end of the signal every inverse Fourier transform, and outputs the signal to the number-of-samples adjustment unit 433.
The number-of-samples adjustment unit 433 adjusts the number of samples in accordance with a number-of-samples signal from the clock frequency difference estimation unit 438 (step ST5). The signal whose number of samples is adjusted by the number-of-samples adjustment unit 433 is output to the FIFO 434. The FIFO 434 is a first-in first-out memory, and temporarily stores the signal output by the number-of-samples adjustment unit 433.
The FIFO 434 outputs the signals, output in the stored order to the adaptive equalization unit 435 in response to a request from the adaptive equalization unit 435 (step ST6). Note that, when the number of stored signals decreases, and the FIFO 434 cannot output signals requested from the adaptive equalization unit 435, the FIFO 434 notifies the adaptive equalization unit 435 that the signals cannot be output.

The adaptive equalization unit 435 adaptively equalizes the signal output by the FIFO 434 using an FIR filter that is an equalization filter (step ST7). For example, the adaptive equalization unit 435 updates an adaptive equalization filter coefficient in such a way that a distribution of the signals to be output is close to an ideal signal distribution. Note that a least mean square algorithm or the like is used for update.

The phase compensation unit 436 compensates for phase shift (phase error) of the signal adaptively equalized by the adaptive equalization unit 435 (step ST8). For example, the phase compensation unit 436 performs phase compensation using the Vitervi-Viterbi algorithm described in Reference Literature 1. The demapping unit 437 receives an input of the signal whose phase shift has been compensated for by the phase compensation unit 436, and demaps the input signal (step ST9).

(Reference Literature 1) A. J. Viterbi and A. M. Viterbi, "Nonlinear estimation of PSK-modulated carrier phase with application to burst digital transmission," Trans. Inf. Theory, Vol. 29, No. 4, pp. 543-551, Jul. 1983.

The clock frequency difference estimation unit 438 detects a clock phase of the signal whose number of samples has been adjusted by the number-of-samples adjustment unit 433. For example, the clock frequency difference estimation unit 438 detects the clock phase of a received signal on the basis of a change in the strength of the received signal using methods described in Reference Literature 2 and Reference Literature 3.

(Reference Literature 2) F. Gardner, "A BPSK/QPSK Timing-Error Detector for Sampled Receivers," in IEEE Transactions on Communications, vol. 34, no. 5, pp. 423-429, May 1986.

(Reference Literature 3) Meng Yan et al., "Digital clock recovery algorithm for Nyquist signal," 2013 Optical Fiber Communication Conference and Exposition and the National Fiber Optic Engineers Conference (OFC/NFOEC), paper OTu2I.7, 2013.

Next, the clock frequency difference estimation unit 438 calculates an estimation value of the clock frequency difference, by using a detection value of the clock phase detected from the signal output by the number-of-samples adjustment unit 433 as an estimation value through the low pass filter, and multiplying the estimation value with a negative constant multiple (step ST10). The clock frequency difference estimation unit 438 determines a sampling phase for each Fourier transform depending on the estimation value of the clock frequency difference, and outputs a delay selection signal to the clock frequency difference compensation unit 439. The delay selection signal is a signal that allows selection of a filter coefficient associated with a delay amount corresponding to the sampling phase determined by the clock frequency difference estimation unit 438 from a coefficient LUT.

Note that the coefficient LUT is lookup table information in which a plurality of filter coefficients used to compensate for wavelength dispersion and adjust delay, are stored, and is provided for each subcarrier demodulation unit 43.

When the sampling phase exceeds $2\pi$ in a positive direction, the clock frequency difference estimation unit 438 outputs, to the number-of-samples adjustment unit 433, a number-of-samples signal indicating the number of samples that is a number obtained by discarding two samples at the end of the signal from the IFFT unit 432 and decreasing the number of samples by two.

Furthermore, when the sampling phase exceeds 0 in a negative direction, the clock frequency difference estimation unit 438 outputs to the number-of-samples adjustment unit 433 a number-of-samples signal indicating the number of samples that does not change from the number of samples of the signal from the IFFT unit 432.

In another case, the clock frequency difference estimation unit 438 outputs to the number-of-samples adjustment unit 433 a number-of-samples signal indicating the number of samples obtained by discarding one sample at the end of the signal from the IFFT unit 432 and decreasing the number of samples by one.

The clock frequency difference compensation unit 439 compensates for wavelength dispersion in an optical transmission path, and stores in the coefficient LUT a plurality of filter coefficients that cause delay (step ST11). The coefficient LUT stores the plurality of filter coefficients associated with a plurality of delay amounts. The clock frequency difference compensation unit 439 selects a filter coefficient associated with the delay amount selected by the clock frequency difference estimation unit 438 from the coefficient LUT using the delay selection signal, and outputs the filter coefficient to the multiplication unit 431. A filter coefficient H (f) is expressed by the following equation (1). In the following equation (1), f represents the frequency, $\psi$ represents the sampling phase, j represents an imaginary number unit, D represents wavelength dispersion, $\lambda$ represents the wavelength of light, c represents the light speed, and $f_s$ represents the sampling frequency.

$$H(f) = \exp\{-j \times (D/2)\times(\lambda^2/2\pi c) \times (2\pi f)^2\}\exp\{j \times (f/f_s) \times \varphi\} \ldots (1)$$

The filter coefficient H(f) is calculated as a delay amount corresponding to a sampling phase obtained by dividing 0 to $2\pi$ into, for example, 16 sections, and is stored in the coefficient LUT. The clock frequency difference estimation unit 438 approximately selects the filter coefficient depending on the delay amount.

As described above, the optical receiver 1 according to Embodiment 1 detects a clock phase of a signal in a time domain whose number of samples has been adjusted, estimates a clock frequency difference from a received signal using a detection value of the clock phase, determines a sampling phase for each FFT depending on an estimation value of the clock frequency difference, selects from the coefficient LUT the filter coefficient associated with a delay amount corresponding to the sampling phase, and multiplies a signal divided by the division unit with the selected filter coefficient.

The optical receiver 1 compensates for the clock frequency difference by dividing subcarrier signals per frequency band and compensating for wavelength dispersion for a signal in the frequency domain obtained by performing FFT on the received signal, adjusting delay at a low speed on the basis of the estimation value of the clock frequency difference, and adjusting remaining delay at a high speed by adaptive equalization. Consequently, the optical receiver 1 can suppress an increase in power consumption required to clock synchronization with communicating parties.

Wavelength dispersion of an optical signal in an optical transmission path is inevitable during optical fiber communication. Hence, conventional optical receivers have required circuits that compensate for wavelength dispersion. By contrast with this, as described above, the optical receiver 1 shares the same filter for compensation for wavelength dispersion and delay adjustment, and consequently does not need an FIR filter for delay adjustment. Furthermore, a large circuit resource is necessary to implement a multiplier on a digital signal processing circuit. Furthermore, the FIR filter needs the multiplier. By contrast with this, the optical receiver 1 does not need a multiplier although the number of filter coefficients to be stored in the coefficient LUT increases. Consequently, the optical receiver 1 makes it possible to reduce the circuit scale.

Embodiment 2.

Although the clock frequency difference estimation unit detects a clock phase of a received signal in the optical receiver according to Embodiment 1, an adaptive equalization unit detects a clock phase in an optical receiver according to Embodiment 2.

FIG. 3 is a block diagram illustrating a configuration of an optical receiver 1A according to Embodiment 2. In FIG. 3, an optical signal received by the optical receiver 1A is obtained by performing frequency division multiplexing on asynchronous optical signals transmitted from a plurality of communicating parties as subcarrier signals. FIG. 3 illustrates a case where the optical receiver 1A can receive an optical signal in which four subcarrier signals at maximum are multiplexed.

As illustrated in FIG. 3, the optical receiver 1A includes the coherent detector 2, the ADC 3, and a reception DPS 4A. The reception DSP 4A includes the FFT unit 41, the division unit 42, and a subcarrier demodulation unit 43A. The subcarrier demodulation unit 43A includes the multiplication unit 431, the IFFT unit 432, the number-of-samples adjustment unit 433, the FIFO 434, an adaptive equalization unit 435A, the phase compensation unit 436, the demapping unit 437, a clock frequency difference estimation unit 438A, and the clock frequency difference compensation unit 439.

The adaptive equalization unit 435A adaptively equalizes the signal output by the FIFO 434 using the FIR filter similarly to Embodiment 1. Furthermore, the adaptive equalization unit 435A detects a clock phase on the basis of the inclination of phase characteristics in the frequency domain of the FIR filter that is the equalization filter, and outputs the detected clock phase to the clock frequency difference estimation unit 438A. The clock frequency difference estimation unit 438A calculates, as an estimation value of a clock frequency difference, a value obtained by multiplying a detection value of the clock phase detected by the adaptive equalization unit 435A with the negative constant multiple through the low pass filter.

For example, the adaptive equalization unit 435A performs Fourier transform on an adaptive equalization filter coefficient of the FIR filter into a signal in the frequency domain, linearly approximates a change in the frequency of the phase of the signal as the phase characteristics of the signal in the frequency domain, and detects the clock phase of a received signal from a linear inclination that indicates the linearly approximated change. The adaptive equalization unit 435A outputs the detected clock phase to the clock frequency difference estimation unit 438A.

The clock frequency difference estimation unit 438A calculates the estimation value of the clock frequency difference, by using the clock phase detected by the adaptive equalization unit 435A as an estimation value through the low pass filter, and multiplying the estimation value with the negative constant multiple. Furthermore, in a case where the inclination of the clock phase is expressed as $\psi/f_s$ with respect to the sampling frequency $f_s$, the clock phase is expressed as the sampling phase $\psi$.

As described above, in the optical receiver 1A according to Embodiment 2, the adaptive equalization unit 435A detects the clock phase on the basis of the inclination of the phase characteristics in the frequency domain of the FIR filter, and outputs the detected clock phase to the clock frequency difference estimation unit 438A. The clock frequency difference estimation unit 438A calculates, as an estimation value of a clock frequency difference, a value obtained by multiplying a detection value of the clock phase, which is detected by the adaptive equalization unit 435A, with the negative constant multiple through the low pass filter.

Similarly to Embodiment 1, the optical receiver 1A does not need the FIR filter for delay adjustment. Furthermore, the optical receiver 1A detects the clock phase of the received signal on the basis of the adaptive equalization filter coefficient of the FIR filter of the adaptive equalization unit 435A, and consequently does not need a clock phase detection circuit in the clock frequency difference estimation unit 438A.

Note that the filter length of the FIR filter in the adaptive equalization unit 435A is approximately 20, and a circuit for performing Fourier transform and linear approximation for detecting the clock phase is sufficiently small, so that it is possible to reduce the circuit scale necessary for detection of the clock phase.

Next, a hardware configuration that implements the functions of the optical receivers 1 and 1A according to Embodiment 1 and Embodiment 2 will be described.

The functions of the reception DSPs 4 and 4A included in the optical receivers 1 and 1A are implemented by a processing circuit. That is, the optical receivers 1 and 1A include the processing circuit for executing processing in steps ST1 to ST11 illustrated in FIG. 2. The processing circuit may be dedicated hardware, yet may be a Central Processing Unit (CPU) that executes programs stored in a memory.

FIG. 4 is a block diagram illustrating the hardware configuration that implements the functions of the optical receivers 1 and 1A. FIG. 5 is a block diagram illustrating a hardware configuration that executes software that implements the functions of the optical receivers 1 and 1A. In FIGS. 4 and 5, a coherent detector 101 is the coherent detector 2 illustrated in FIGS. 1 and 3. An ADC 102 is the ADC 3 illustrated in FIGS. 1 and 3.

In a case where the above processing circuit is a processing circuit 100 of the dedicated hardware illustrated in FIG. 4, the processing circuit 100 corresponds to, for example, a single circuit, a composite circuit, a programmed processor, a parallel-programmed processor, an Application Specific Integrated Circuit (ASIC), a Field-Programmable Gate Array (FPGA), or a combination thereof. The functions of the FFT unit, the division unit, and the subcarrier demodulation unit included in the optical receivers 1 and 1A may be implemented as different processing circuits, and these functions may be implemented collectively by one processing circuit.

In a case where the above processing circuit is a processor 103 illustrated in FIG. 5, the functions of the FFT unit, the division unit, and the subcarrier demodulation unit included in the optical receivers 1 and 1A are implemented by software, firmware, or a combination of software and firmware. Note that the software or the firmware is described as programs, and stored in a memory 104.

The processor 103 implements the functions of the FFT unit, the division unit, and the subcarrier demodulation unit by reading and executing the programs stored in the memory 104. For example, the FFT unit, the division unit, and the subcarrier demodulation unit included in the optical receivers 1 and 1A include the memory 104 for storing the programs for eventually executing the processing in steps ST1 to ST11 illustrated in FIG. 2 when the processor 103 executes the programs.

These programs cause a computer to execute a processing procedure or method performed by the FFT unit, the division unit, and the subcarrier demodulation unit included in the optical receivers 1 and 1A. The memory 104 may be a computer-readable storage medium having recorded thereon the programs for causing the computer to function as the FFT unit, the division unit, and the subcarrier demodulation unit.

The memory 104 corresponds to, for example, a non-volatile or volatile semiconductor memory such as a Random Access Memory (RAM), a Read Only Memory (ROM), a flash memory, an Erasable Programmable Read Only Memory (EPROM), or an Electrically-EPROM (EEPROM), a magnetic disk, a flexible disk, an optical disk, a compact disk, a mini disk, a DVD, or the like.

Part of the functions of the FFT unit, the division unit, and the subcarrier demodulation unit included in the optical receivers 1 and 1A may be implemented as dedicated hardware, and part of the functions may be implemented by software or firmware. For example, the functions of the FFT unit and the division unit may be implemented by the processing circuit 102 that is the dedicated hardware, and the function of the subcarrier demodulation unit may be implemented by the processor 103 by reading and executing the programs stored in the memory 104. Thus, the processing circuit can implement the above functions by hardware, software, firmware, or a combination thereof.

Note that the embodiments can be combined, any components in the embodiments can be modified, or any components in the embodiments can be omitted, as long as these modifications are covered by the scope of the invention, which is defined by the appended claims.

## INDUSTRIAL APPLICABILITY

The optical receiver according to the present disclosure can be used for optical communication of a digital coherent system, for example.

## REFERENCE SIGNS LIST

1, 1A: optical receiver. 2, 101: coherent detector. 3, 102: ADC. 4, 4A: reception DSP. 41: FFT unit. 42: division unit.

43. 43A: subcarrier demodulation unit. 100: processing circuit. 101: coherent detector. 103: processor. 104: memory. 431: multiplication unit. 432: IFFT unit. 433: number-of-samples adjustment unit. 435, 435A: adaptive equalization unit. 436: phase compensation unit. 437: demapping unit. 438, 438A: clock frequency difference estimation unit. 439: clock frequency difference compensation unit

## Claims

1. An optical receiver to receive (1, 1A) an optical signal in which a plurality of subcarrier signals have been subjected to frequency division multiplexing, the optical receiver comprising:

    a coherent detector (2) adapted to coherently detect the optical signal, and convert the optical signal into an electrical signal;
    an analog-digital converter (3) adapted to convert a received signal converted into the electrical signal by the coherent detector (2) into a digital signal;
    a Fourier transform unit (41) adapted to perform Fourier transform on the received signal converted into the digital signal by the analog-to-digital converter (3) into a signal in a frequency domain;
    a division unit (42) adapted to divide the signal in the frequency domain converted by the Fourier transform unit (41) into a signal per frequency band of each of the subcarrier signals; and
    a plurality of subcarrier demodulation units (43, 43A) adapted to each demodulate a corresponding one of the subcarrier signals, by multiplying the signal divided by the division unit with a filter coefficient for compensating for wavelength dispersion and adjusting delay of the optical signal in an optical transmission path, converting the signal multiplied with the filter coefficient into a signal in a time domain, adaptively equalizing the signal in the time domain whose number of samples has been adjusted, compensating for phase shift of the equalized signal, and demapping the signal whose phase shift has been compensated for, the plurality of subcarrier demodulation units (43, 43A) being each provided per frequency band of each of the subcarrier signals,
    wherein the subcarrier demodulation units (43, 43A) each
    include a lookup table in which a plurality of the filter coefficients are stored depending on delay amounts,
    adapted to detect a clock phase of the signal in the time domain whose number of samples has been adjusted,
    adapted to estimate a clock frequency difference from the received signal using a detection value of the clock phase, and
    adapted to determine a sampling phase for each Fourier transform depending on an estimation value of the clock frequency difference, select from the lookup table the filter coefficient associated with the delay amount corresponding to the determined sampling phase, and multiply the signal divided by the division unit (42) with the selected filter coefficient,

    wherein the subcarrier demodulation units (43) each include:

    a multiplication unit (431) adapted to multiply the signal divided by the division unit (42) with the filter coefficient,
    an inverse Fourier transform unit (432) adapted to perform inverse Fourier transform on the signal multiplied with the filter coefficient into the signal in the time domain, add one extra sample to an end of the signal every inverse Fourier transform, and output the signal,
    a number-of-samples adjustment unit (433) adapted to adjust the number of samples of the signal in the time domain on a basis of a number-of-samples signal,
    a first-in first-out memory (434) adapted to store the signal whose number of samples has been adjusted,
    an adaptive equalization unit (435, 435A) adapted to adaptively equalize the signal output from the first-in first-out memory (434) in such a way that the signal is close to an ideal signal point distribution,
    a phase compensation unit (436) adapted to compensate for the phase shift of the equalized signal,
    a demapping unit (437) adapted to demap the signal whose phase shift has been compensated for,
    a clock frequency difference estimation unit (438, 438A) adapted to estimate the clock frequency difference from the received signal, determine the sampling phase corresponding to the clock frequency difference every Fourier transform, and select the filter coefficient associated with the delay amount corresponding to the sampling phase, and
    a clock frequency difference compensation unit (439) adapted of to read from the lookup table the filter coefficient selected by the clock frequency difference estimation unit (438, 438A), and output the filter coefficient to the multiplication unit (431).

2. The optical receiver (1) according to claim 1, wherein the clock frequency difference estimation unit (438) is adapted to detect a clock phase of a signal output from the number-of-samples adjustment unit (433), and calculate, as an estimation value of the clock frequency difference, a value obtained by multiplying a detection value of the clock phase with a negative constant multiple through a low pass filter.

**3.** The optical receiver (1, 1A) according to claim 2, wherein

the number-of-samples adjustment unit (433) is adapted to adjust the number of samples of the signal in the time domain converted by the inverse Fourier transform unit (432) in accordance with the number-of-samples signal output from the clock frequency difference estimation unit (438, 438A), and
the clock frequency difference estimation unit (438, 438A) is adapted to
output to the number-of-samples adjustment unit (433) a number-of-samples signal for instructing to discard two samples at the end of the signal in the time domain converted by the inverse Fourier transform unit (432) and decrease the number of samples by two when the determined sampling phase exceeds $2\pi$ in a positive direction,
output to the number-of-samples adjustment unit (433) a number-of-samples signal for instructing not to change the number of samples of the signal in the time domain converted by the inverse Fourier transform unit (432) when the determined sampling phase exceeds 0 in a negative direction, and
output to the number-of-samples adjustment unit (433) a number-of-samples signal for instructing to discard one sample at the end of the signal in the time domain converted by the inverse Fourier transform unit (432) and decrease the number of samples by one when the determined sampling phase does not exceed $2\pi$ in the positive direction, and does not exceed 0 in the negative direction.

**4.** The optical receiver (1A) according to claim 2 or 3, wherein

the adaptive equalization unit (435A) is adapted to detect a clock phase on a basis of an inclination of phase characteristics in the frequency domain of an equalization filter, and outputs the detected clock phase to the clock frequency difference estimation unit (438A), and
the clock frequency difference estimation unit (438A) is adapted to calculate, as the estimation value of the clock frequency difference, a value obtained by multiplying the detection value of the clock phase detected by the adaptive equalization unit (435A) with the negative constant multiple through the low pass filter.

**5.** An optical reception method of an optical receiver (1, 1A) that receives an optical signal in which a plurality of subcarrier signals have been subjected to frequency division multiplexing, and comprises:

a coherent detector (2) to coherently detect the optical signal, and convert the optical signal into an electrical signal;
an analog-digital converter (3) to convert a received signal converted into the electrical signal by the coherent detector (2) into a digital signal;
a Fourier transform unit (41) to perform Fourier transform on the received signal converted into the digital signal by the analog-to-digital converter (3) into a signal in a frequency domain;
a division unit (42) to divide the signal in the frequency domain converted by the Fourier transform unit (41) into a signal per frequency band of each of the subcarrier signals; and
a plurality of subcarrier demodulation units (43, 43A) each provided per frequency band of each of the subcarrier signals, and each including a multiplication unit (431), an inverse Fourier transform unit (432), a number-of-samples adjustment unit (433), a first-in first-out memory (434), an adaptive equalization unit (435, 435A), a phase compensation unit (436), a demapping unit (437), a clock frequency difference estimation unit, and a clock frequency difference compensation unit (438, 438A),
the optical reception method comprising:

a step of, by the multiplication unit (431), multiplying the signal divided by the division unit (42) with a filter coefficient for compensating for wavelength dispersion and adjusting delay of the optical signal in an optical transmission path;
a step of, by the inverse Fourier transform unit (432), performing inverse Fourier transform on the signal multiplied with the filter coefficient into a signal in a time domain, adding one extra sample to an end of the signal every inverse Fourier transform, and outputting the signal;
a step of, by the number-of-samples adjustment unit (433), adjusting a number of samples of the signal in the time domain on a basis of a number-of-samples signal;
a step of, by the first-in first-out memory (434), storing the signal whose number of samples has been adjusted;

a step of, by the adaptive equalization unit (435, 435A), adaptively equalizing the signal output from the first-in first-out memory in such a way that the signal is close to an ideal signal point distribution;
a step of, by the phase compensation unit (436), compensating for phase shift of the equalized signal;
a step of, by the demapping unit (437), demapping the signal whose phase shift has been compensated for;
a step of, by the clock frequency difference estimation unit (438, 438A), estimating a clock frequency difference from the received signal, determining a sampling phase corresponding to the clock frequency difference every Fourier transform, and selecting the filter coefficient associated with the delay amount corresponding to the sampling phase; and
a step of, by the clock frequency difference compensation unit (439), reading the filter coefficient selected by the clock frequency difference estimation unit from a lookup table in which a plurality of the filter coefficients are stored depending on delay amounts, and outputting the filter coefficient to the multiplication unit.

## Patentansprüche

**1.** Optischer Empfänger zum Empfangen (1, 1A) eines optischen Signals, in welchem eine Mehrzahl von Unterträgersignalen einem Frequenzmultiplexverfahren unterzogen worden sind, wobei der optische Empfänger umfasst:

einen kohärenten Detektor (2), welcher dazu angepasst ist, das optische Signal kohärent zu detektieren, und das optische Signal in ein elektrisches Signal zu wandeln;
einen Analog-Digital-Wandler (3), welcher dazu angepasst ist, ein empfangenes Signal, welches durch den kohärenten Detektor (2) in ein elektrisches Signal gewandelt worden ist, in ein digitales Signal zu wandeln;
eine Fouriertransformationseinheit (41), welche dazu angepasst ist, eine Fouriertransformation des empfangenen Signals, welches durch den Analog-zu-Digital-Wandler (3) in das digitale Signal gewandelt worden ist, in ein Signal in einem Frequenzraum durchzuführen;
eine Teilungseinheit (42), welche dazu angepasst ist, das Signal in dem Frequenzraum, welches durch die Fouriertransformationseinheit (41) gewandelt worden ist, in ein Signal pro Frequenzband von jedem der Unterträgersignale zu teilen; und
eine Mehrzahl von Unterträgerdemodulationseinheiten (43, 43A), welche dazu angepasst sind, jede ein entsprechendes der Unterträgersignale zu demodulieren durch ein Multiplizieren des durch die Teilungseinheit geteilten Signals mit einem Filterkoeffizienten für eine Kompensation einer Wellenlängendispersion und eine Anpassung einer Verzögerung des optischen Signals in einem optischen Transmissionspfad, ein Wandeln des mit dem Filterkoeffizienten multiplizierten Signals in ein Signal in einem Zeitraum, ein adaptives Angleichen des Signals in dem Zeitraum, dessen Anzahl von Abtastsignalen angepasst worden ist, ein Kompensieren einer Phasenverschiebung des angeglichenen Signals, und ein Demapping des Signals, dessen Phasenverschiebung kompensiert worden ist, wobei die Mehrzahl von Unterträgerdemodulationseinheiten (43, 43A) jede pro Frequenzband von jedem der Unterträgersignale bereitgestellt sind,
wobei die Unterträgerdemodulationseinheiten (43, 43A) jede eine Nachschlagetabelle umfassen, in welcher eine Mehrzahl der Filterkoeffizienten abhängig von Verzögerungsausmaßen gespeichert sind,
dazu angepasst, eine Clock-Phase des Signals in dem Zeitraum zu detektieren, dessen Anzahl von Abtastsignalen angepasst worden ist,
dazu angepasst, einen Clock-Frequenzunterschied zu dem empfangenen Signal unter Verwendung eines Detektionswertes der Clock-Phase abzuschätzen, und dazu angepasst, eine Abtastsignalphase für jede Fouriertransformation abhängig von einem Abschätzungswert des Clock-Frequenzunterschieds zu bestimmen, von der Nachschlagetabelle den Filterkoeffizienten auszuwählen, welcher mit dem Verzögerungsausmaß assoziiert ist, welches der bestimmten Abtastsignalphase entspricht, und das durch die Teilungseinheit (42) geteilte Signal mit dem ausgewählten Filterkoeffizienten zu multiplizieren,
wobei die Unterträgerdemodulationseinheiten (43) jede umfassen:

eine Multiplikationseinheit (431), welche dazu angepasst ist, das durch die Teilungseinheit (42) geteilte Signal mit dem Filterkoeffizienten zu multiplizieren, eine inverse Fouriertransformationseinheit (432), welche dazu angepasst ist, eine inverse Fouriertransformation des Signals, welches mit dem Filterkoeffizienten multipliziert worden ist, in das Signal in dem Zeitraum durchzuführen, ein zusätzliches Abtastsignal an einem Ende des Signals bei jeder inversen Fouriertransformation hinzuzufügen, und das Signal auszugeben,
eine Anzahl-von-Abtastsignalen-Anpassungseinheit (433), welche dazu angepasst ist, die Anzahl von Abtastsignalen des Signals in dem Zeitraum auf einer Basis eines Anzahl-von-Abtastsignalen-Signals anzupassen,
einen First-In-First-Out-Speicher (434), welcher dazu angepasst ist, das Signal zu speichern, dessen Anzahl von Abtastsignalen angepasst worden ist,
eine adaptive Angleichungseinheit (435, 435A), welche dazu angepasst ist, das Signal, welches von dem First-In-First-Out-Speicher (434) ausgegeben wird, derart adaptiv anzugleichen, dass das Signal nahe einer idealen Signalpunktverteilung liegt,
eine Phasenkompensationseinheit (436), welche dazu angepasst ist, die Phasenverschiebung des angeglichenen Signals zu kompensieren,
eine Demappingeinheit (437), welche dazu angepasst ist, das Signal zu demappen, dessen Phasenverschiebung kompensiert worden ist,
eine Clock-Frequenzunterschiedsabschätzungseinheit (438, 438A), welche dazu angepasst ist, den Clock-Frequenzunterschied zu dem empfangenen Signal abzuschätzen, die Abtastsignalphase zu bestimmen, welche dem Clock-Frequenzunterschied bei jeder Fouriertransformation entspricht, und den Filterkoeffizienten auszuwählen, welcher mit dem Verzögerungsausmaß assoziiert ist, welches der Abtastsignalphase entspricht, und
eine Clock-Frequenzunterschiedskompensationseinheit (439), welche dazu angepasst ist, von der Nachschlagetabelle den Filterkoeffizienten auszulesen, welcher durch die Clock-Frequenzunterschiedsabschätzungseinheit (438, 438A) ausgewählt worden ist, und den Filterkoeffizienten an die Multiplikationseinheit (431) auszugeben.

**2.** Optischer Empfänger (1) nach Anspruch 1, wobei die Clock-Frequenzunterschiedsabschätzungseinheit (438) dazu angepasst ist, eine Clock-Phase eines von der Anzahl-von-Abtastsignalen-Anpassungseinheit (433) ausgegebenen Signals zu detektieren, und einen Wert als einen Abschätzungswert für den Clock-Frequenzunterschied zu berechnen, welcher durch ein Multiplizieren eines Detektionswertes der Clock-Phase mit einem negativen, konstanten Vielfachen durch einen Tiefpassfilter erhalten worden ist.

**3.** Optischer Empfänger (1, 1A) nach Anspruch 2, wobei

die Anzahl-von-Abtastsignalen-Anpassungseinheit (433) dazu angepasst ist, die Anzahl von Abtastsignalen des durch die inverse Fouriertransformationseinheit (432) gewandelten Signals in dem Zeitraum in Übereinstimmung mit dem von der Clock-Frequenzunterschiedsabschätzungseinheit (438, 438A) ausgegebenen Anzahl-von-Abtastsignalen-Signal anzupassen, und
die Clock-Frequenzunterschiedsabschätzungseinheit (438, 438A) dazu angepasst ist,
ein Anzahl-von-Abtastsignalen-Signal an die Anzahl-von-Abtastsignalen-Anpassungseinheit (433) auszugeben, um anzuweisen, zwei Abtastsignale an dem Ende des durch die inverse Fouriertransformationseinheit (432) gewandelten Signals in dem Zeitraum zu verwerfen und die Anzahl von Abtastsignalen um zwei zu verringern, wenn die bestimmte Abtastsignalphase $2\pi$ in eine positive Richtung übersteigt,
ein Anzahl-von-Abtastsignalen-Signal an die Anzahl-von-Abtastsignalen-Anpassungseinheit (433) auszugeben, um anzuweisen, die Anzahl von Abtastsignalen des durch die inverse Fouriertransformationseinheit (432) gewandelten Signals in dem Zeitraum nicht zu ändern, wenn die bestimmte Abtastsignalphase 0 in eine negative Richtung übersteigt, und
ein Anzahl-von-Abtastsignalen-Signal an die Anzahl-von-Abtastsignalen-Anpassungseinheit (433) auszugeben, um anzuweisen, ein Abtastsignal an dem Ende des durch die inverse Fouriertransformationseinheit (432) gewandelten Signals in dem Zeitraum zu verwerfen und die Anzahl von Abtastsignalen um eins zu verringern, wenn die bestimmte Abtastsignalphase $2\pi$ in der positiven Richtung nicht übersteigt und 0 in der negativen Richtung nicht übersteigt.

**4.** Optischer Empfänger (1A) nach Anspruch 2 oder 3, wobei

die adaptive Angleichungseinheit (435A) dazu angepasst ist, eine Clock-Phase basierend auf einer Neigung von Phasencharakteristika in dem Frequenzraum eines Angleichungsfilters zu detektieren, und die detektierte Clock-Phase an die Clock-Frequenzunterschiedsabschätzungseinheit (438A) ausgibt, und
die Clock-Frequenzunterschiedsabschätzungseinheit (438A) dazu angepasst ist, einen Wert als den abgeschätzten Wert des Clock-Frequenzunterschieds zu berechnen, welcher durch ein Multiplizieren des durch die adaptive Angleichungseinheit (435A) detektierten Detektionswertes der Clock-Phase mit dem negativen, konstanten Vielfachen durch den Tiefpassfilter erhalten worden ist.

**5.** Optisches Empfangsverfahren eines optischen Empfängers (1, 1A), welcher ein optisches Signal empfängt, in welchem eine Mehrzahl von Unterträgersignalen einem Frequenzmultiplexverfahren unterzogen worden sind, und umfasst:

einen kohärenten Detektor (2) um das optische Signal kohärent zu detektieren und das optische Signal in ein elektrisches Signal zu wandeln;
einen Analog-Digital-Wandler (3), um ein empfangenes Signal, welches durch den kohärenten Detektor (2) in das elektrische Signal gewandelt worden ist, in ein digitales Signal zu wandeln;
eine Fouriertransformationseinheit (41), um eine Fouriertransformation des empfangenen Signals, welches durch den Analog-zu-Digital-Wandler (3) in das digitale Signal gewandelt worden ist, in ein Signal in einem Frequenzraum durchzuführen;
eine Teilungseinheit (42), um das Signal in dem Frequenzraum, welches durch die Fouriertransformationseinheit (41) gewandelt worden ist, in ein Signal pro Frequenzband von jedem der Unterträgersignale zu teilen; und
eine Mehrzahl von Unterträgerdemodulationseinheiten (43, 43A), welche jede pro Frequenzband von jedem der Unterträgersignale bereitgestellt sind und jede eine Multiplikationseinheit (431), eine inverse Fouriertransformationseinheit (432),
eine Anzahl-von-Abtastsignalen-Anpassungseinheit (433), einen First-In-First-Out-Speicher (434), eine adaptive Angleichungseinheit (435, 435A), eine Phasenkompensationseinheit (436), eine Demappingeinheit (437), eine Clock-Frequenzunterschiedsabschätzungseinheit und eine Clock-Frequenzunterschiedskompensationseinheit (438, 438A) umfassen,
wobei das optische Empfangsverfahren umfasst:

einen Schritt, durch die Multiplikationseinheit (431), eines Multiplizierens des durch die Teilungseinheit (42) geteilten Signals mit einem Filterkoeffizienten für eine Kompensation einer Wellenlängendispersion und eine Anpassung einer Verzögerung des optischen Signals in einem optischen Transmissionspfad;
einen Schritt, durch die inverse Fouriertransformationseinheit (432), eines Durchführens einer inversen Fouriertransformation des mit dem Filterkoeffizienten multiplizierten Signals in ein Signal in einem Zeitraum, wobei bei jeder inversen Fouriertransformation ein zusätzliches Abtastsignal an einem Ende des Signals hinzugefügt wird, und eines Ausgebens des Signals;
einen Schritt eines Anpassens, durch die Anzahl-von-Abtastsignalen-Anpassungseinheit (433), einer Anzahl von Abtastsignalen des Signals in dem Zeitraum auf Basis eines Anzahl-von-Abtastsignalen-Signals;
einen Schritt eines Speicherns, durch den First-In-First-Out-Speicher (434), des Signals, dessen Anzahl von Abtastsignalen angepasst worden ist;
einen Schritt eines adaptiven Angleichens, durch die adaptive Angleichungseinheit (435, 435A) des von dem First-In-First-Out-Speicher ausgegebenen Signals derart, dass das Signal nahe einer idealen Signalpunktverteilung liegt;
einen Schritt eines Kompensierens, durch die Phasenkompensationseinheit (436), einer Phasenverschiebung des angeglichenen Signals;
einen Schritt eines Demappings, durch die Demappingeinheit (437), des Signals, dessen Phasenverschiebung kompensiert worden ist;
einen Schritt, durch die Clock-Frequenzunterschiedsabschätzungseinheit (438, 438A), eines Abschätzens eines Clock-Frequenzunterschieds von dem empfangenen Signal, eines Bestimmens einer Abtastsignalphase, welche dem Clock-Frequenzunterschied entspricht bei jeder Fouriertransformation, und eines Auswählens des Filterkoeffizienten, welcher mit dem Verzögerungsausmaß assoziiert ist, welches der Abtastsignalphase entspricht; und
einen Schritt, durch die Clock-Frequenzunterschiedskompensationseinheit (439), eines Auslesens des durch die Clock-Frequenzunterschiedsabschätzungseinheit ausgewählten Filterkoeffizienten aus einer Nachschlagetabelle, in welcher eine Mehrzahl der Filterkoeffizienten abhängig von Verzögerungsausmaßen gespeichert sind, und eines Ausgebens des Filterkoeffizienten an die Multiplikationseinheit.

## Revendications

**1.** Récepteur optique pour recevoir (1, 1A) un signal optique dans lequel une pluralité de signaux de sous-porteuse ont été soumis à un multiplexage par division de fréquence, le récepteur optique comprenant :

un détecteur cohérent (2) adapté pour détecter de manière cohérente le signal optique, et convertir le signal optique en un signal électrique ;
un convertisseur analogique-numérique (3) adapté pour convertir en un signal numérique un signal reçu converti en le signal électrique par le détecteur cohérent (2) ;
une unité (41) de transformation de Fourier adaptée pour réaliser une transformation de Fourier sur le signal reçu, converti en le signal numérique par le convertisseur analogique-numérique (3), en un signal dans un domaine fréquentiel ;
une unité (42) de division adaptée pour diviser le signal dans le domaine fréquentiel, converti par l'unité (41) de transformation de Fourier, en un signal par bande de fréquence de chacun des signaux de sous-porteuse ; et
une pluralité d'unités (43, 43A) de démodulation de sous-porteuse adaptées pour démoduler chacune un signal correspondant des signaux de sous-porteuse, en multipliant le signal divisé par l'unité de division par un coefficient de filtre afin de compenser la dispersion de longueur d'onde et d'ajuster le retard du signal optique dans un chemin de transmission optique, en convertissant le signal multiplié par le coefficient de filtre en un signal dans un domaine temporel, en égalisant de manière adaptative le signal dans le domaine temporel dont le nombre d'échantillons a été ajusté, en compensant le déphasage du signal égalisé, et en démappant le signal dont le déphasage a été compensé, la pluralité d'unités (43, 43A) de démodulation de sous-porteuse étant fournies chacune par bande de fréquence de chacun des signaux de sous-porteuse,
dans lequel les unités (43, 43A) de démodulation de sous-porteuse incluent chacune une table de recherche dans laquelle une pluralité des coefficients de filtre sont stockés en fonction de quantités de retard,
sont adaptées pour détecter une phase d'horloge du signal dans le domaine temporel dont le nombre d'échantillons a été ajusté,
sont adaptées pour estimer une différence de fréquence d'horloge à partir du signal reçu en utilisant une valeur de détection de la phase d'horloge, et
sont adaptées pour déterminer une phase d'échantillonnage pour chaque transformée de Fourier en fonction d'une valeur d'estimation de la différence de fréquence d'horloge, sélectionner dans la table de recherche le coefficient de filtre associé à la quantité de retard correspondant à la phase d'échantillonnage déterminée, et multiplier le signal divisé par l'unité (42) de division par le coefficient de filtre sélectionné,
dans lequel les unités (43) de démodulation de sous-porteuse incluent chacune :

une unité (431) de multiplication adaptée pour multiplier le signal divisé par l'unité (42) de division par le coefficient de filtre,
une unité (432) de transformation de Fourier inverse adaptée pour réaliser une transformation de Fourier inverse sur le signal multiplié par le coefficient de filtre dans le domaine temporel, ajouter un échantillon supplémentaire à une fin du signal à chaque transformation de Fourier inverse, et délivrer en sortie le signal,
une unité (433) d'ajustement de nombre d'échantillons adaptée pour ajuster le nombre d'échantillons du signal dans le domaine temporel sur une base d'un signal de nombre d'échantillons,
une mémoire premier entré premier sorti (434) adaptée pour stocker le signal dont le nombre d'échantillons a été ajusté,
une unité (435, 435A) d'égalisation adaptative adaptée pour égaliser de manière adaptative le signal délivré en sortie de la mémoire premier entré premier sorti (434), de manière à ce que le signal soit proche d'une distribution de points de signal idéale, une unité (436) de compensation de phase adaptée pour compenser le déphasage du signal égalisé,
une unité (437) de démappage adaptée pour démapper le signal dont le déphasage a été compensé,
une unité (438, 438A) d'estimation de différence de fréquence d'horloge adaptée pour estimer la différence de fréquence d'horloge à partir du signal reçu, déterminer la phase d'échantillonnage correspondant à la différence de fréquence d'horloge à chaque transformation de Fourier, et sélectionner le coefficient de filtre associé à la quantité de retard correspondant à la phase d'échantillonnage, et
une unité (439) de compensation de différence de fréquence d'horloge adaptée pour lire dans la table de recherche le coefficient de filtre sélectionné par l'unité (438, 438A) d'estimation de différence de fréquence d'horloge, et délivrer en sortie le coefficient de filtre à l'unité (431) de multiplication.

**2.** Récepteur optique (1) selon la revendication 1, dans lequel l'unité (438) d'estimation de différence de fréquence d'horloge est adaptée pour détecter une phase d'horloge d'un signal délivré en sortie par l'unité (433) d'ajustement de nombre d'échantillons et calculer, en tant que valeur d''estimation de la différence de fréquence d'horloge, une valeur obtenue en multipliant une valeur de détection de la phase d'horloge par un multiple constant négatif par l'intermédiaire d'un filtre passe-bas.

**3.** Récepteur optique (1, 1A) selon la revendication 2, dans lequel

l'unité (433) d'ajustement de nombre d'échantillons est adaptée pour ajuster le nombre d'échantillons du signal dans le domaine temporel, converti par l'unité (432) de transformation de Fourier inverse, en fonction du signal de nombre d'échantillons délivré en sortie par l'unité (438, 438A) d'estimation de différence de fréquence d'horloge, et
l'unité (438, 438A) d'estimation de différence de fréquence d'horloge est adaptée pour transmettre à l'unité (433) d'ajustement de nombre d'échantillons un signal de nombre d'échantillons afin d'ordonner de rejeter deux échantillons à la fin du signal dans le domaine temporel converti par l'unité de transformation de Fourier inverse (432), et de diminuer le nombre d'échantillons de deux lorsque la phase d'échantillonnage déterminée dépasse $2\pi$ dans un sens positif,
délivrer en sortie à l'unité (433) d'ajustement de nombre d'échantillons un signal de nombre d'échantillons pour ordonner de ne pas changer le nombre d'échantillons du signal dans le domaine temporel converti par l'unité (432) de transformation de Fourier inverse lorsque la phase d'échantillonnage déterminée dépasse 0 dans un sens négatif, et
délivrer en sortie à l'unité (433) d'ajustement de nombre d'échantillons un signal de nombre d'échantillons pour ordonner de rejeter un échantillon à la fin du signal dans le domaine temporel converti par l'unité (432) de transformation de Fourier inverse et de diminuer le nombre d'échantillons de un lorsque la phase d'échantillonnage déterminée ne dépasse pas $2\pi$ dans le sens positif, et ne dépasse pas 0 dans le sens négatif.

**4.** Récepteur optique (1A) selon la revendication 2 ou 3, dans lequel

l'unité (435A) d'égalisation adaptative est adaptée pour détecter une phase d'horloge sur une base d'une inclinaison de caractéristiques de phase dans le domaine fréquentiel d'un filtre d'égalisation, et délivre en sortie la phase d'horloge détectée à l'unité (438A) d'estimation de différence de fréquence d'horloge, et
l'unité (438A) d'estimation de différence de fréquence d'horloge est adaptée pour calculer, en tant que valeur d'estimation de la différence de fréquence d'horloge, une valeur obtenue en multipliant la valeur de détection de la phase d'horloge détectée par l'unité (435A) d'égalisation adaptative par le multiple constant négatif par l'intermédiaire du filtre passe-bas.

**5.** Procédé de réception optique d'un récepteur optique (1, 1A) qui reçoit un signal optique dans lequel une pluralité de signaux de sous-porteuse ont été soumis à un multiplexage par division de fréquence, et comprend :

un détecteur cohérent (2) pour détecter de manière cohérente le signal optique, et convertir le signal optique en un signal électrique ;
un convertisseur analogique-numérique (3) pour convertir en un signal numérique un signal reçu converti en signal électrique par le détecteur cohérent (2) ;
une unité (41) de transformation de Fourier pour réaliser une transformation de Fourier sur le signal reçu, converti en le signal numérique par le convertisseur analogique-numérique (3), en un signal dans un domaine fréquentiel ;
une unité (42) de division pour diviser le signal dans le domaine fréquentiel, converti par l'unité (41) de transformation de Fourier, en un signal par bande de fréquence de chacun des signaux de sous-porteuse ; et
une pluralité d'unités (43, 43A) de démodulation de sous-porteuse fournies chacune par bande de fréquence de chacun des signaux de sous-porteuse, et incluant chacune une unité (431) de multiplication, une unité (432) de transformation de Fourier inverse, une unité (433) d'ajustement de nombre d'échantillons, une mémoire premier entré premier sorti (434), une unité (435, 435A) d'égalisation adaptative, une unité (436) de compensation de phase, une unité (437) de démappage, une unité d'estimation de différence de fréquence d'horloge, et une unité (438, 438A) de compensation de différence de fréquence d'horloge,
le procédé de réception optique comprenant :

une étape, par l'unité (431) de multiplication, de multiplication du signal divisé par l'unité (42) de division par un coefficient de filtre afin de compenser la dispersion de longueur d'onde et d'ajuster le retard du signal optique dans un chemin de transmission optique ;
une étape, par l'unité (432) de transformation de Fourier inverse, de réalisation d'une transformation de Fourier inverse sur le signal multiplié par le coefficient de filtre en un signal dans un domaine temporel, d'ajout d'un échantillon supplémentaire à une fin du signal à chaque transformation de Fourier inverse, et de délivrance en sortie du signal ;
une étape, par l'unité (433) d'ajustement de nombre d'échantillons, d'ajustement d'un nombre d'échantillons du signal dans le domaine temporel sur une base d'un signal de nombre d'échantillons ;
une étape, par la mémoire premier entré premier sorti (434), de stockage du signal dont le nombre d'échantillons a été ajusté ;
une étape, par l'unité (435, 435A) d'égalisation adaptative, d'égalisation de manière adaptative du signal délivré en sortie de la mémoire premier entré premier sorti de manière à ce que le signal soit proche d'une distribution de points de signal idéale ;
une étape, par l'unité (436) de compensation de phase, de compensation du déphasage du signal égalisé ;
une étape, par l'unité (437) de démappage, de démappage du signal dont le déphasage a été compensé,

une étape, par l’unité (438, 438A) d’estimation de différence de fréquence d’horloge, d’estimation d’une différence de fréquence d’horloge à partir du signal reçu, de détermination d’une phase d’échantillonnage correspondant à la différence de fréquence d’horloge à chaque transformation de Fourier, et de sélection du coefficient de filtre associé à la quantité de retard correspondant à la phase d’échantillonnage ; et

une étape, par l’unité (439) de compensation de différence de fréquence d’horloge, de lecture du coefficient de filtre sélectionné par l’unité d’estimation de différence de fréquence d’horloge dans une table de recherche dans laquelle plusieurs coefficients de filtre sont stockés en fonction des quantités de retard, et de délivrance en sortie du coefficient de filtre à l’unité de multiplication.

FIG. 1

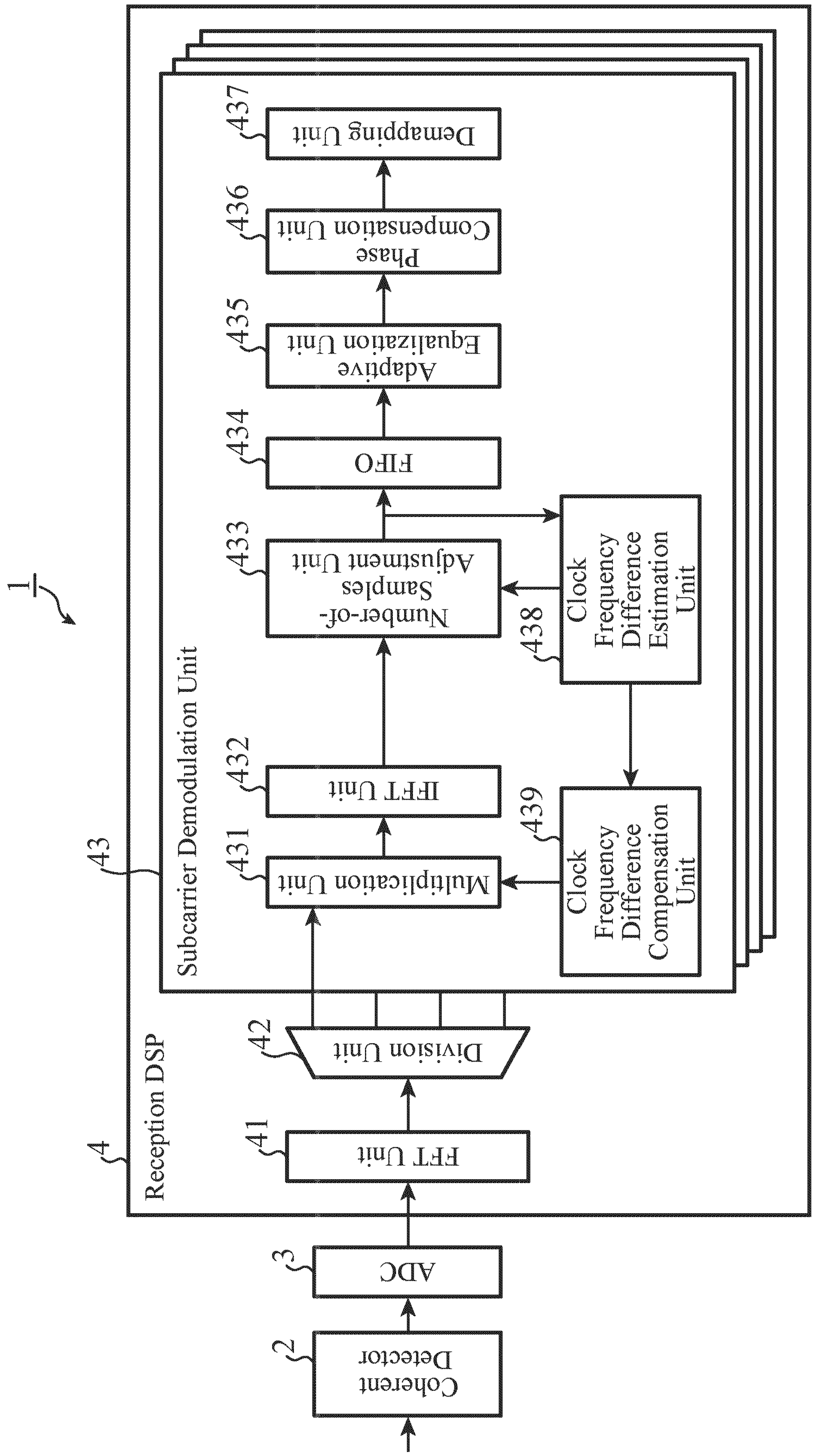
1
2
Coherent Detector
3
ADC
4
Reception DSP
41
FFT Unit
42
Division Unit
43
Subcarrier Demodulation Unit
431
Multiplication Unit
432
IFFT Unit
433
Number-of-Samples Adjustment Unit
434
FIFO
435
Adaptive Equalization Unit
436
Phase Compensation Unit
437
Demapping Unit
438
Clock Frequency Difference Estimation Unit
439
Clock Frequency Difference Compensation Unit

FIG. 2

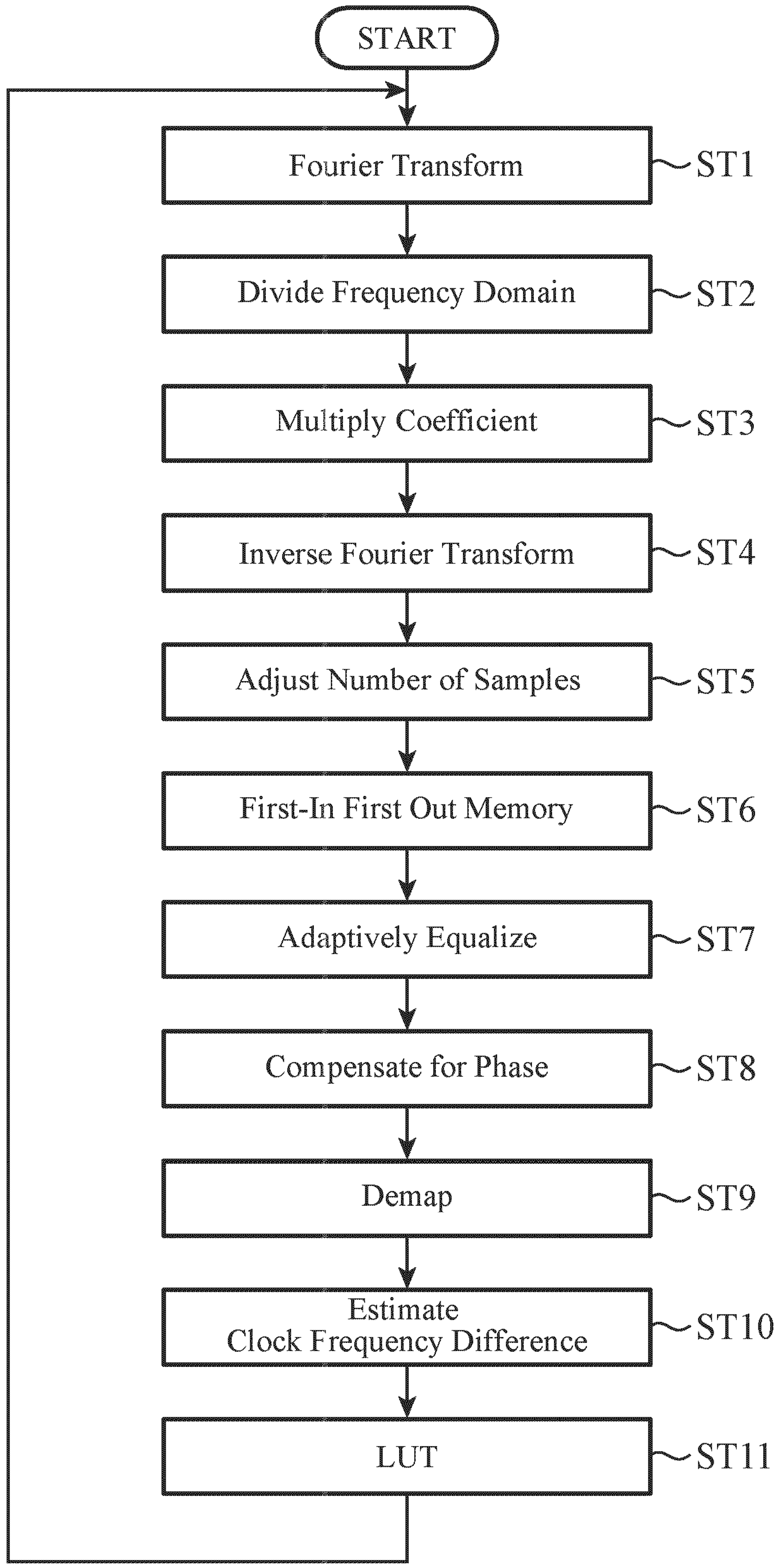
START
Fourier Transform
ST1
Divide Frequency Domain
ST2
Multiply Coefficient
ST3
Inverse Fourier Transform
ST4
Adjust Number of Samples
ST5
First-In First Out Memory
ST6
Adaptively Equalize
ST7
Compensate for Phase
ST8
Demap
ST9
Estimate
Clock Frequency Difference
ST10
LUT
ST11

FIG. 3

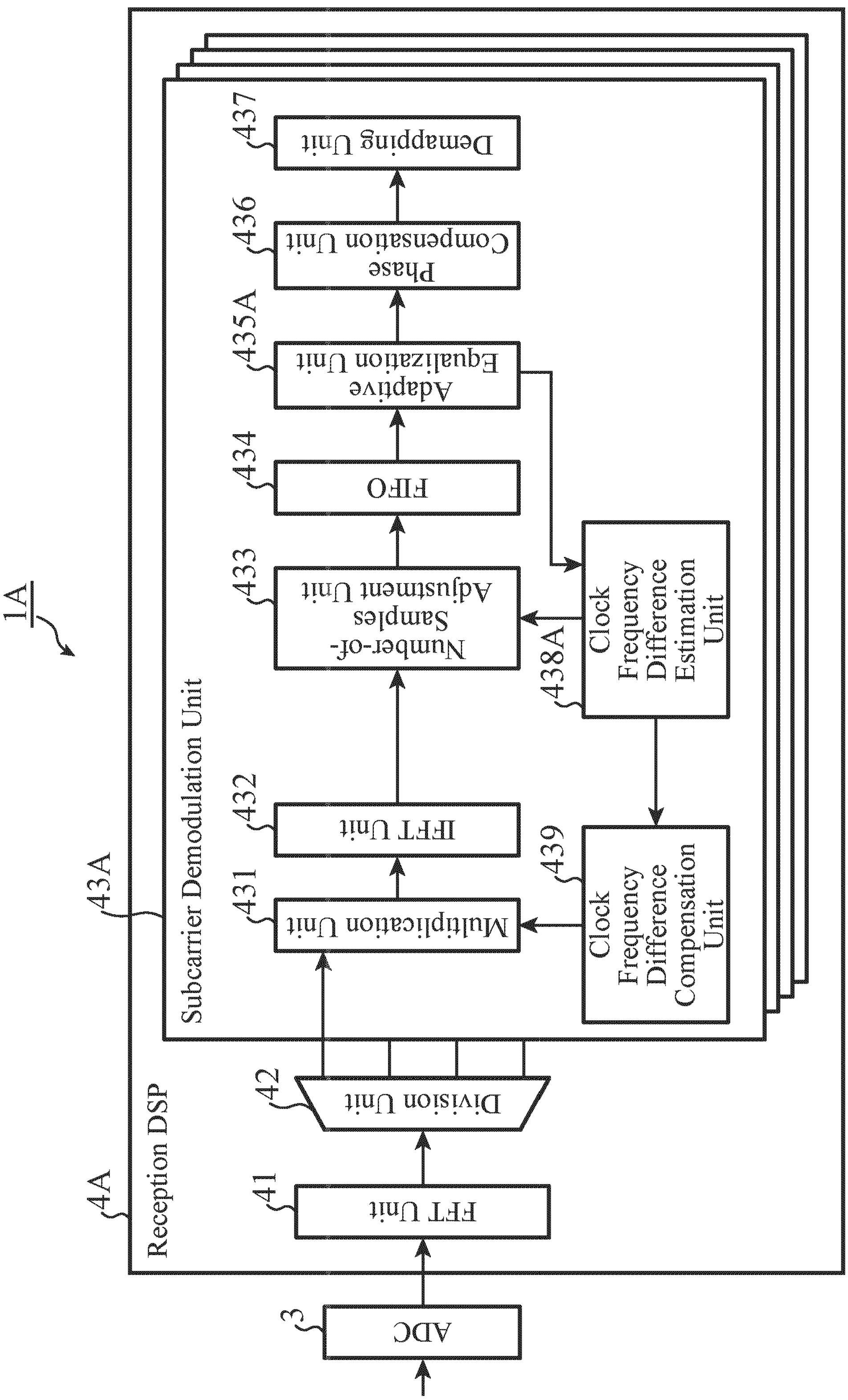
1A
4A
Reception DSP
3
ADC
41
FFT Unit
42
Division Unit
43A
Subcarrier Demodulation Unit
431
Multiplication Unit
432
IFFT Unit
433
Number-of-Samples Adjustment Unit
434
FIFO
435A
Adaptive Equalization Unit
436
Phase Compensation Unit
437
Demapping Unit
438A
Clock Frequency Difference Estimation Unit
439
Clock Frequency Difference Compensation Unit

FIG. 4

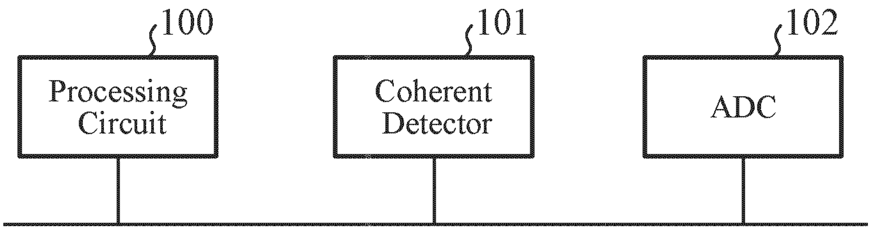
100
Processing Circuit
101
Coherent Detector
102
ADC

FIG. 5

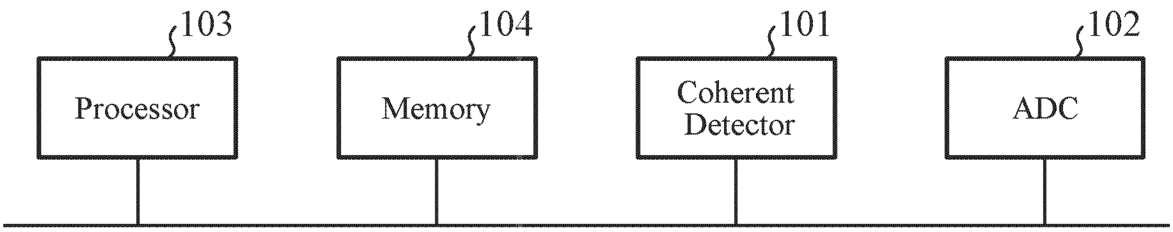
103
Processor
104
Memory
101
Coherent Detector
102
ADC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9379820 B2
- WO 2021181568 A1
- EP 4120593 A1
- US 2010329697 A1
- US 9686020 B2
- US 9048957 B2

### Non-patent literature cited in the description


- Structure of a Digital Feedback Clock Recovery for Parallelized Receivers. **D. SCHMIDT** ; **B. LANKL**. Advanced Photonics, OSA Technical Digest (CD). Optical Society of America, 2011
- **A. J. VITERBI** ; **A. M. VITERBI**. Nonlinear estimation of PSK-modulated carrier phase with application to burst digital transmission. *Trans. Inf. Theory*, July 1983, vol. 29 (4), 543-551
- **F. GARDNER**. A BPSK/QPSK Timing-Error Detector for Sampled Receivers. *IEEE Transactions on Communications*, vol. 34 (5), 423-429
- **MENG YAN et al.** Digital clock recovery algorithm for Nyquist signal. *Optical Fiber Communication Conference and Exposition and the National Fiber Optic Engineers Conference (OFC/NFOEC)*, 2013